**Europäisches Patentamt**

**European Patent Office**

**Office européen des brevets**

(11) Numéro de publication : **0 515 275 A1**

# (12) DEMANDE DE BREVET EUROPEEN

(21) Numéro de dépôt : **92401391.5**

(22) Date de dépôt : **21.05.92**

(51) Int. Cl.⁵ : **B60N 2/14**

(30) Priorité : **23.05.91 FR 9106234**

(43) Date de publication de la demande :
**25.11.92 Bulletin 92/48**

(84) Etats contractants désignés :
**DE ES FR GB IT PT SE**

(71) Demandeur : **BERTRAND FAURE AUTOMOBILE "BFA"**
**Parc d'Activités du Moulin de Massy, 23 à 29, rue du Saule Trapu**
**F-91300 Massy (FR)**

(72) Inventeur : **Baloche, François**
**La Carneille**
**61100 Flers (FR)**

(74) Mandataire : **Madeuf, Claude Alexandre Jean et al**
**CABINET MADEUF 3, avenue Bugeaud**
**F-75116 Paris (FR)**

(54) **Plateau formant base tournante pour siège de véhicule.**

(57) Plateau formant base tournante pour siège de véhicule dans lequel un premier plateau (6) présentant en son centre une zone circulaire (6a) comporte dans sa partie centrale (6b) une zone surélevée dans laquelle sont inclus, d'une part, un chemin de roulement circulaire (7) pour un jeu de billes (8) et, d'autre part, dans sa partie centrale (6c) une ouverture circulaire (9) tandis que des pattes (11, 12) fixées sous l'armature (10) de l'assise d'un siège sont solidaires de tubes d'assise transversaux (14) montés sous les bordures opposées d'une pièce (13) de forme carrée, présentant en son centre un disque (15) dont la partie inférieure (15a) circulaire sert de cage de roulement au jeu de billes (8) tandis que la bordure externe forme un chemin de roulements (13a) pour un deuxième jeu de billes (16), puis un capot circulaire (17) fixé sur le dessus (6c) du plateau (6), forme cage pour le jeu de billes (16), finalement un organe de verrouillage empêche la rotation de la pièce (13) par rapport au plateau (6).

FIG. 2

EP 0 515 275 A1

On utilise parfois dans certains véhicules pour les sièges avant des bases tournantes pour faire pivoter l'un ou les deux sièges avant de 90° ou de 180° afin soit de les amener à effectuer une rotation pour faciliter la sortie du passager, soit pour permettre à ce même passager de discuter face à face avec le ou les passager(s) assis sur la banquette arrière du véhicule considéré. Cependant, ces bases tournantes n'ont pas donné satisfaction car, en général, elles doivent supporter des contraintes diverses rendant le fonctionnement défectueux surtout lorsque la ceinture de sécurité est solidaire directement ou indirectement de cette base tournante.

Pour éviter cet inconvénient, certaines bases tournantes sont réalisées par des moyens extrêmement rigides, ce qui a pour effet, de rendre, d'une part, ces bases tournantes lourdes et difficilement manoeuvrables et, d'autre part, coûteuses.

La présente invention remédie à cet inconvénient, en créant un plateau formant base tournante pour siège de véhicule qui a pour principale particularité de ne subir aucune contrainte, puisqu'il est prévu de monter les attaches des ceintures de sécurité directement sur les glissières de réglage longitudinal permettant l'avancement ou le recul du siège considéré en permettant ainsi la réalisation d'un plateau formant base tournante léger, d'un maniement fiable et facile et d'un prix de revient bon marché.

De plus, construit de façon modulaire, ce plateau peut s'adapter aisément à tous les types de sièges sans difficulté. Seuls les éléments de raccordement au siège considéré nécessitent une adaptation.

Conformément à l'invention, le plateau formant base tournante pour siège de véhicule dans lequel des glissières rectilignes permettant l'avance ou le recul du siège présentent, à la partie supérieure mobile, des traverses tubulaires, est caractérisé en ce que le premier plateau présentant en son centre une zone circulaire comporte dans sa partie centrale une zone surélevée dans laquelle sont inclus, d'une part, un chemin de roulement circulaire pour un jeu de billes et, d'autre part, dans sa partie centrale une ouverture circulaire tandis que des pattes fixées sous l'armature de l'assise d'un siège sont solidaires de tubes d'assise transversaux montés sous les bordures opposées d'une pièce de forme carrée, présentant en son centre un disque dont la partie inférieure circulaire sert de cage de roulement au jeu de billes tandis que la bordure externe forme un chemin de roulements pour un deuxième jeu de billes, puis un capot circulaire fixé sur le dessus du plateau, forme cage pour le jeu de billes, finalement un organe de verrouillage empêche la rotation de la pièce par rapport au plateau.

Diverses autres caractéristiques de l'invention ressortent d'ailleurs de la description détaillée qui suit.

Une forme de réalisation de l'objet de l'invention est représentée, à titre d'exemple non limitatif, aux dessins annexés.

La fig. 1 est une vue en plan du plateau formant base tournante pour un siège de véhicule.

La fig. 2 est une coupe-élévation diamétrale de la base tournante de la fig. 1 montrant également la position de l'armature de l'assise du siège.

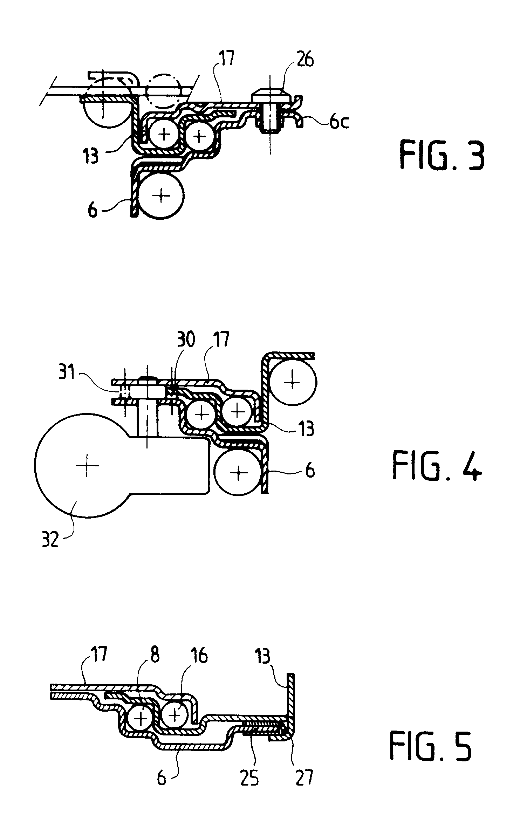

La fig. 3 est une coupe suivant la ligne III-III de la fig. 1.

La fig. 4 est une coupe suivant la ligne IV-IV de la fig. 1.

La fig. 5 est une coupe suivant la ligne V-V de la fig. 1.

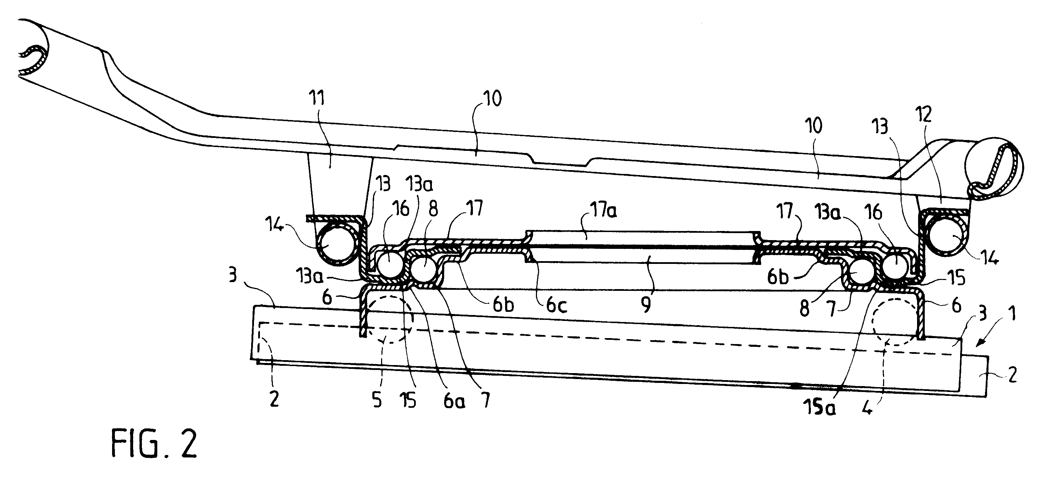

A la fig. 2, on a représenté une glissière 1 dont le profilé inférieur 2 est fixé sur le plancher du véhicule, tandis que le profilé supérieur 3 peut coulisser comme cela est classique sur le profilé inférieur 2. Le verrouillage du profilé 3 sur le profilé 2 peut être réalisé par tout moyen convenable. Les deux profilés supérieurs 3 de la glissière 1 placés de chaque côté du siège sont reliés par des tubes transversaux 4, 5 et ces tubes portent un premier plateau 6 présentant en son centre une zone circulaire 6a qui forme dans sa zone supérieure un chemin de roulement circulaire 7 pour un jeu de billes 8 puis finalement, dans la partie centrale 6c une zone surélevée percée en son centre d'une ouverture 9. La partie inférieure de l'armature de l'assise du siège 10 porte des pattes 11, 12 qui viennent se fixer par tout moyen convenable sur des tubes d'assise 14, eux-mêmes solidaires d'une pièce 13 de forme carrée présentant en son centre un chemin de roulement 15 qui sert de cage de roulement au jeu de billes 8, puis par sa conformité circulaire 13a sert de chemin de roulement à un deuxième jeu de billes 16. Finalement, un capot circulaire 17 est fixé sur le dessus 6b d'un premier plateau 6 formant cage supérieure pour le deuxième jeu de billes 16. 17a désigne une ouverture centrale du capot 17, ouverture correspondant à l'ouverture 9 du plateau 6.

Ce montage permet donc par l'intermédiaire des deux roulements à billes 8, 16 une rotation aisée de la couronne 13 par rapport au premier plateau 6 et, de ce fait, la rotation du siège dont seule est représentée la partie inférieure de l'armature de l'assise 10.

Ce montage permet aussi d'assurer un fonctionnement sans jeu du fait des deux roulements à billes 8 et 16 qui travaillent en opposition. En effet, la fermeture du plateau 17 assure une contrainte sur les billes évitant tout jeux entre chaque zône de roulement.

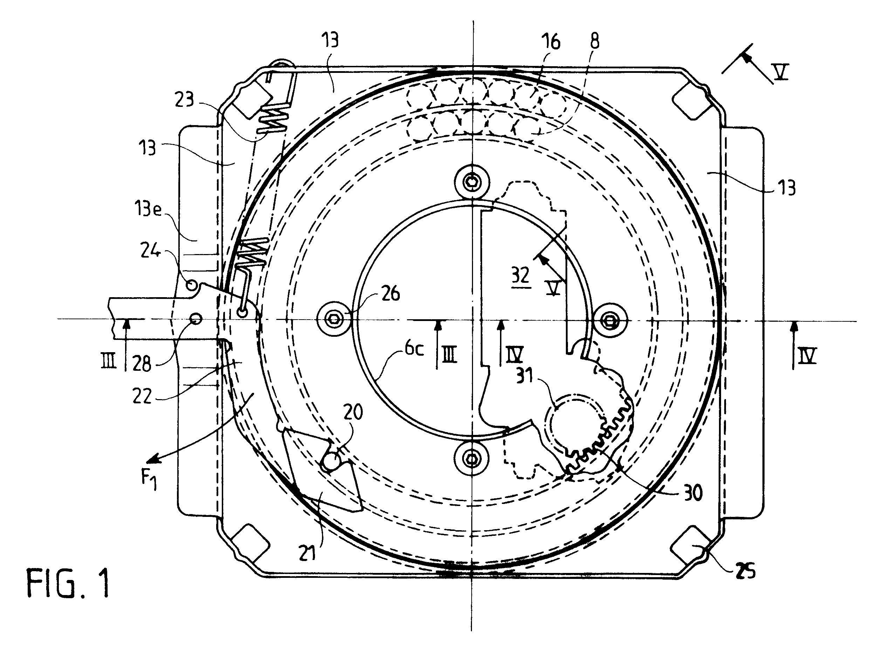

Il y a lieu de noter qu'il est prévu des pions 20 fixes solidaires de la couronne 17 qui elle-même est solidaire du premier plateau 6 par les fixations 26 et qui permet à l'aide d'une tête de verrou 21 en forme de fourchette de bloquer la couronne 13 par rapport au premier plateau 6 solidaires des glissières 1. La tête de verrou 21 est prolongée par un levier arqué 22 rappelé normalement en position de verrouillage par un ressort 23. Le déverrouillage de la couronne 13 par rapport au premier plateau 6 se fait en pivotant sur l'axe 28 dans le sens de la flèche F$_1$ (voir fig. 1) solidaire d'un prolongement 13e du plateau 6. Lorsqu'on relâche la pression exercée sur le levier 22, celui-ci reprend sa position première (voir fig. 1) en ramenant le siège à sa position face au volant du véhicule, position donnée par le pion 20. 24 désigne la butée limitant la rotation du levier 22 pour libérer le pion 20.

Dans certains cas, comme cela est représenté schématiquement à la fig. 1, le bord interne du disque 15 peut comporter une denture 30 qui, sous l'effet d'un pignon 31 commandé en rotation par un motoréducteur 32, peut assurer la rotation de la pièce 13 sans que le passager effectue le mouvement à la main.

Il est prévu sur le premier plateau 6 aux quatre angles des pattes 25 qui reçoivent des patins plastiques 27 ou analogues, assurant dans les positions choisies du siège (siège en position de conduite ou retourné à 180°), une reprise d'effort évitant une trop forte sollicitation sur les organes de rotation en améliorant ainsi notamment la rigidité. Cette reprise d'effort peut être obtenue de diverses façons en fonction des exigences souhaitées. Ceci est le cas lorsque le siège est constitué d'une ceinture de sécurité trois points dite embarquée sur le siège.

De plus, il est possible de rendre articulées les extrémités inférieures des pattes 11, 12 par rapport aux tubes d'assise 14 et de monter les extrémités supérieures de ces mêmes pattes 11, 12 sur des mécanismes de rotation solidaires du dessous de l'armature 10 du siège pour régler l'assise de ce siège.

## Revendications

**1 -** Plateau formant base tournante pour siège de véhicule dans lequel des glissières rectilignes (1) permettant l'avance ou le recul du siège présentent, à la partie supérieure mobile (3), des traverses tubulaires (4, 5), caractérisé en ce que le premier plateau (6) présentant en son centre une zone circulaire (6a) comporte dans sa partie centrale (6b) une zone surélevée dans laquelle sont inclus, d'une part, un chemin de roulement circulaire (7) pour un jeu de billes (8) et, d'autre part, dans sa partie centrale (6c) une ouverture circulaire (9) tandis que des pattes (11, 12) fixées sous l'armature (10) de l'assise d'un siège sont solidaires de tubes d'assise transversaux (14) montés sous les bordures opposées d'une pièce (13) de forme carrée, présentant en son centre un disque (15) dont la partie inférieure (15a) circulaire sert de cage de roulement au jeu de billes (8) tandis que la bordure externe forme un chemin de roulements (13a) pour un deuxième jeu de billes (16), puis un capot circulaire (17) fixé sur le dessus (6c) du plateau (6), forme cage pour le jeu de billes (16), finalement un organe de verrouillage empêche la rotation de la pièce (13) par rapport au plateau (6).

**2 -** Plateau suivant la revendication 1, caractérisé en ce que la pièce (13) porte à sa partie supérieure, un pion (20) coopérant avec un verrou à fourchette (21) pour le blocage de la pièce (13) par rapport au plateau (6), ce verrou étant rappelé en permanence en position de verrouillage par un ressort (23).

**3 -** Plateau suivant l'une des revendications 1 et 2, caractérisé en ce que le bord interne du disque (15) comporte une denture (30) qui, sous l'effet d'un pignon (31) commandé en rotation par un motoréducteur (32), assure la rotation de la pièce (13) et donc du siège.

**4 -** Plateau formant base tournante pour siège de véhicule sensiblement tel que décrit et représenté aux dessins annexés.

FIG. 1

FIG. 2

FIG. 3

FIG. 4

FIG. 5

Office européen
des brevets

**RAPPORT DE RECHERCHE EUROPEENNE**

Numero de la demande

| | DOCUMENTS CONSIDERES COMME PERTINENTS | | EP 92 40 1391 |
|---|---|---|---|

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 358 285 (SUZUKI) <br> * colonne 2, ligne 20 - colonne 6, ligne 36; figures 1-11 * | 1,4 | B60N2/14 |
| A | EP-A-0 175 584 (FUJI) <br> * page 6, ligne 1 - page 9, ligne 13; figures 1-10 * | 1 | |
| A | EP-A-0 285 149 (FUJIKIKO) | | |
| A | WO-A-8 909 145 (GOODALL) | | |
| A | US-A-2 670 028 (DOTY) | | |

DOMAINES TECHNIQUES RECHERCHES (Int. Cl.5)

B60N
A61G

Le présent rapport a été établi pour toutes les revendications

| Lieu de la recherche | Date d'achèvement de la recherche | Examinateur |
|---|---|---|
| LA HAYE | 17 JUILLET 1992 | HORVATH R. |

**CATEGORIE DES DOCUMENTS CITES**

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant